# EUROPÄISCHE PATENTSCHRIFT

(11) **EP 1 619 963 B1**
(45) Veröffentlichungstag und Bekanntmachung des Hinweises auf die Patenterteilung: **13.06.2007**
(21) Anmeldenummer: 04729025.9
(22) Anmeldetag: 23.04.2004
(51) Int. Cl.: A23L 1/20, A23L 1/211, A23L 1/305

(54) **SOJAMEHL UND VERFAHREN ZU DESSEN HERSTELLUNG**
SOYBEAN FLOUR AND METHOD FOR THE PRODUCTION THEREOF
FARINE DE SOJA ET PROCEDE DE FABRICATION ASSOCIE

(30) Priorität: 05.05.2003 DE 10320077
(43) Veröffentlichungstag der Anmeldung: 01.02.2006
(73) Patentinhaber: Bühler AG, 9240 Uzwil (CH)
(72) Erfinder: LAUX, Joseph, J., CH-8272 Ermatingen (CH); GAVIN, Michel, CH-8400 Winterthur (CH); COPLAND, Don, Brookville, IN 47012 (US); ANFINSEN, Jon, R., Grainesville, FL 32608 (US)
(74) Vertreter: Frommhold, Joachim
(86) Internationale Anmeldenummer: PCT/CH2004/000249
(87) Internationale Veröffentlichungsnummer: WO 2004/098314

(56) Entgegenhaltungen:
- EP-A- 0 165 451
- WO-A-02/39831
- DE-A- 2 700 791
- US-A- 4 748 038
- US-A- 5 807 602
- US-A1- 2002 031 597
- SNYDER H E ET AL: "Soybean Utilization" SOYBEAN UTILIZATION, NEW YORK, VAN NOSTRAND REINHOLD, US, 1987, Seiten 74-86,133, XP002201822

## Beschreibung

Die vorliegende Erfindung bezieht sich auf ein Sojamehl und ein Verfahren zu dessen Herstellung.

Es sind zahlreiche Verfahren zum Herstellen von Sojamehl bekannt.

Die DE 27 00 791 offenbart ein Verfahren zum Herstellen von feinem, von Geruch befreitem Sojabohnenpulver, bei dem Sojabohnen gepresst und getrocknet werden. Danach werden sie grob gemahlen, um die Hülle zu entfernen, dampfgemälzt, zwischengemahlen und schliesslich feingemahlen.

Die US-A-5 807 602 offenbart ein Verfahren zur Herstellung von Sojabohnenteilchen, wobei Sojabohnen geschält, gemahlen, erhitzt und "flash evaporiert" werden, wodurch die Teilchen weiter zerkleinert werden.

In erster Linie ist die Enzymaktivität für den mitunter unangenehmen Geschmack von Sojabohnen verantwortlich.

Wenn Enzyme nicht richtig inaktiviert werden, können inakzeptable Veränderungen des Produktgeschmacks auftreten. Allerdings läuft man beim Inaktivieren von Enzymen Gefahr, wertvolle Sojabohnen-Phytochemikalien zu zerstören.

Beim Herstellen von Sojamehl oder einem beliebigen Sojamehlextrakt daraus für die grundlegende Verwendung bei Nahrungsmitteln und Nutrazeutika, tritt daher das Problem auf, dass es unmöglich oder zumindest sehr schwierig und kostspielig ist, ein Produkt zu gewinnen, das noch den vollen ernährungsphysiologischen Wert des Ausgangsmaterials hat und gleichzeitig keinen typischen Bohnengeschmack von Sojaprodukten aufweist.

Der vorliegenden Erfindung liegt die Aufgabe zugrunde, ein neuartiges Verfahren bereitzustellen, um ein Sojamehl herzustellen, das diese Nachteile nicht aufweist.

Diese Aufgabe wird durch das Verfahren gemäss Anspruch 1 und das Sojamehl gemäss Anspruch 21 gelöst.

Erfindungsgemäss weist das Verfahren zum Herstellen eines Sojamehls aus Sojabohnen die folgenden Schritte auf:
a) Schälen von Sojabohnen bis zu einem Schälgrad von mehr als 95%;
b) Zerkleinern und Vereinheitlichen der Grösse der geschälten Sojabohnen zu einer Teilchengrössen-Verteilung, bei der 90% der Sojabohnenteilchen im Bereich von 100 µm bis 1 mm liegen, indem man die geschälten Sojabohnen Schlagkräften aussetzt;
c) Deaktivieren eines Enzymsystems der zerkleinerten und in ihrer Grösse vereinheitlichten Sojabohnenteilchen; und
d) Feinzerkleinern der zerkleinerten und in ihrer Grösse vereinheitlichten Sojabohnenteilchen zu einer Teilchengrössen-Verteilung, bei der 95% der Teilchen kleiner als 100 µm sind, indem man die deaktivierten, zerkleinerten und in ihrer Grösse vereinheitlichten Sojabohnenteilchen Scherkräften aussetzt.

Das Schälen der Sojabohnen bis zu einem Schälgrad von mehr als 95% (Schritt a) ist eine Vorraussetzung für die anschliessende Zerkleinerung der Sojabohnen unter Verwendung von Scherkräften (Schritt d). Da mehr als 95% der Schalen entfernt werden, verbleiben nur sehr wenige Schalenteilchen in dem Gemisch, nachdem die Schritte zur Zerkleinerung und Vereinheitlichung der Grösse sowie zur Deaktivierung durchgeführt worden sind. Wenn zu viele solcher Schalenteilchen in dem zu zerkleinerten Gemisch übrig wären, wäre es unmöglich, eine richtige Zerkleinerung zu erzielen. Vorzugsweise sind 90% der Teilchen nach Schritt d) kleiner als 50 µm.

Das Zerkleinern und Vereinheitlichen der Grösse der geschälten Teilchen zu einer Grössenverteilung, bei der 90% der Sojabohnenteilchen in dem Bereich von 100 µm bis 1 mm liegen, indem man die geschälten Sojabohnen Schlagkräften aussetzt (Schritt b), ist eine Vorraussetzung dafür, dass die anschliessende Deaktivierung möglichst einheitlich auf das zu deaktivierende Produkt einwirkt (Schritt c).

Es hat sich überraschenderweise ergeben, dass die Feinzerkleinerung (Mikrovermahlung) der zuvor zerkleinerten und in ihrer Grösse vereinheitlichten Teilchen zu einer Teilchengrössen-Verteilung mit 95% der Teilchen kleiner als 100 µm durch Ausüben von Scherkräften auf die zuvor (Schritte b bis c) deaktivierten zerkleinerten und in ihrer Grösse vereinheitlichten Sojabohnen-Teilchen (Schritt d) sich auf das Mundgefühl des erhaltenen Sojabohnenmehls günstig auswirkt, ohne dessen ernährungsphysiologischen Wert zu beeinträchtigen.

Somit wird ein Sojamehl bereitgestellt, das nach einer thermischen Behandlung keinen bohnigen Geschmack aufweist, sondern geschmacksfrei bzw. geschmacksneutral ist und sich im Mund nicht sandig anfühlt, wenn es in Produkten verwendet wird.

In diesem Text bezieht sich der Ausdruck "ernährungsphysiologischer Wert" auf das gesamte Spektrum der physiologisch nützlichen Bestandteile von Sojabohnen einschliesslich typischer Soja-Phytochemikalien, wie z.B. Isoflavone, Saponine, etc.

In der Regel wird der Schälungsschritt (a) an ganzen Sojabohnen durchgeführt.

Das Schälen in Schritt a) kann unter Verwendung einer Schlagschälmaschine durchgeführt werden, wie z.B. einer OTWZ-Schlagschälmaschine von Bühler.

Die Sojabohnen-Temperatur sollte während des Schälens in Schritt a) unter 30°C gehalten werden, und zwar vorzugsweise im Lufttemperaturbereich etwa 115 - 120°C. Allerdings kann anstelle einer derartigen "Kaltschälung" auch eine "Heissschälung" bei Sojabohnen-Temperaturen oberhalb 100°C - 110°C, vorzugsweise im Lufttemperaturbereich von etwa 140 bis 160°C durchgeführt werden.

Vorzugsweise wird das Zerkleinern und Vereinheitlichen der Grössen der geschälten Sojabohnen im Schritt b) in einer Atmosphäre mit weniger als 10 Vol.% Sauerstoff, vorzugsweise in einem Gemisch aus Luft und Stickstoff durchgeführt, um wiederum eine oxidative Beschädigung des Produktes zu vermeiden und eine Beeinträchtigung seines ernährungsphysiologischen Werts zu verhindern.

Die Zerkleinerung und Vereinheitlichung der Grösse in Schritt b) kann unter Verwendung einer Hammermühle durchgeführt werden.

Vorzugsweise werden die geschälten Sojabohnen zerkleinert und in ihrer Grösse vereinheitlicht, so dass eine Teilchengrössenverteilung vorliegt, bei der 80% der Sojabohnenteilchen in dem Bereich von 100 µm bis 500 mm liegen. Das Zerkleinern und Vereinheitlichen der Grösse des Produktes zu einer derartigen mittleren Grösse und einer derart engen Grössenverteilung vor der thermischen Deaktivierung gewährleistet, dass die zerkleinerten und in ihrer Grösse vereinheitlichten Produktteilchen im wesentlichen dieselbe thermische Behandlung sowohl an ihrer Oberfläche als auch in ihrer Mitte erfahren. Somit ist es möglich, eine gleichförmige Produktdeaktivierung zu erreichen, wie weiter oben schon erwähnt wurde.

Vorzugsweise werden die zerkleinerten und in ihrer Grösse vereinheitlichten Sojabohnenteilchen bei Temperaturen von 90 bis 100°C in Schritt c), vorzugsweise bei relativen Feuchtigkeiten von 95 bis 100% deaktiviert.

Vorzugsweise wird die Deaktivierung in Schritt c) durch Befeuchten, Erwärmen und Einwirkenlassen der Feuchtigkeit auf die zerkleinerten und in ihrer Grösse vereinheitlichten Sojabohnenteilchen durchgeführt, und zwar vorzugsweise in einem BCTC- Vorkonditionierer von Bühler. Im wesentlichen wird dadurch der Lipoxygenase-Gehalt im Produkt reduziert bzw. eliminiert.

Die Deaktivierung in Schritt c) kann auch durchgeführt werden, indem man einen Extruder anstelle des Vorkonditionierers oder zusätzlich zum Vorkonditionierer verwendet.

Vorzugsweise wird die Feinzerkleinerung in Schritt d) unter Verwendung eines Reibwalzwerks durchgeführt, wie z.B. eines DNWA-Reibwalzwerks von Bühler.

Vorzugsweise erfolgt vor dem Feinzerkleinerungsschritt d) ein Schritt zur Feuchtigkeitseinstellung, bei dem die Feuchtigkeit der deaktivierten zerkleinerten und geschälten Sojabohnen (Schritte a und b) auf einen Feuchtigkeitswert von 8 bis 12 Gew.%, vorzugsweise 9 bis 11 Gew.% eingestellt werden. In den meisten Fällen ist ein Trocknen der Sojabohnenteilchen notwendig, und der Schritt zur Einstellung der Feuchtigkeit wird z.B. thermo-pneumatisch durchgeführt. Es hat sich überraschenderweise gezeigt, dass die Feinzerkleinerung bei derartigen Feuchtigkeitswerten den Geschmack des Produktes verbessert, indem der bohnige Geschmack beseitigt wird und stattdessen Geschmacklosigkeit bzw. ein leerer Geschmack und/oder etwas malziger Geschmack erzeugt werden. Ein solcher leerer oder "neutraler" Geschmack ist dann wichtig, wenn das Sojamehl als Beigabe in Lebensmittelprodukten verwendet wird, die verschiedene Arten unterschiedlicher Geschmacksrichtungen haben können und durch den Geschmack der Beigabe nicht beeinträchtigt werden sollten.

Vorzugsweise werden bei der Feinzerkleinerung in Schritt d) Teilchen im Bereich von 0,05 µm bis 150 µm, vorzugsweise im Bereich von 10 bis 50 µm hergestellt.

Vorzugsweise erfolgt das Schälen in Schritt a) bis zu einem Schälgrad von mehr als 98%. Somit kann die Feinzerkleinerung in Schritt d) in dem Reibwalzwerk effizienter durchgeführt werden, vorzugsweise in einem einzigen Durchlauf, wobei die Gefahr einer thermischen Beschädigung des Produktes und einer Beeinträchtigung des ernährungsphysiologischen Werts des Produktes auf ein Minimum verringert wird.

Erfindungsgemäss wird ein Sojamehl bereitgestellt, bei dem die maximale Teilchengrösse kleiner als 150 µm ist, bei dem das Sojabohnen-Enzymsystem zumindest teilweise durch Hitze deaktiviert ist und der Schalengehalt kleiner als 0,5 Gew.% ist.

Vorzugsweise liegt die maximale Teilchengrösse des Sojamehls im Bereich von 0,05 µm bis 150 µm vorzugsweise im Bereich von 10 bis 50 µm.

Vorzugsweise beträgt der Schalengehalt weniger als 0,2 Gew.%.

Vorzugsweise ist der Proteingehalt des hergestellten Sojamehls grösser als 100% des Proteingehalts der Ausgangs-Sojabohnen (Protein-Anreicherung).

Vorzugsweise ist der Nahrungsfaserfasergehalt des hergestellten Sojamehls kleiner als 70% des Nahrungsfasergehalts der Ausgangs-Sojabohnen.

Vorzugsweise ist der Lipoxygenase-Gehalt des hergestellten Sojamehls kleiner als 0,1 %% des Lipoxygenase-Gehalts der Ausgangs-Sojabohnen.

Vorzugsweise ist der Ölgehalt des hergestellten Sojamehls grösser als 90% des Ölgehalts der Ausgangs-Sojabohnen.

Vorzugsweise ist der Stickstoff-Löslichkeitsindex (NSI) des hergestellten Sojamehls grösser als 60% des NSI der Ausgangs-Sojabohnen.

Vorzugsweise ist der Isoflavon-Gehalt des hergestellten Sojamehls grösser als 70% des Isoflavon-Gehalts der Ausgangs-Sojabohnen.

Vorzugsweise ist die Teilchengrösse-Verteilung des hergestellten Sojamehls derart, dass mehr als 30% der Mehlteilchen kleiner als 10 µm sind.

Vorzugsweise ist der Trypsininhibitor-Gehalt des hergestellten Sojamehls grösser als 50% des Trypsininhibitor-Gehalts der Ausgangs-Sojabohnen.

Vorzugsweise wird das obige Sojamehl unter Verwendung des erfindungsgemässen Verfahrens wie oben beschrieben hergestellt.

Vorzugsweise ist das erfindungsgemässe Verfahren ein kontinuierlicher Prozess.

Das erfindungsgemässe Sojamehl kann als Beigabe in Lebensmittelprodukten verwendet werden, wie z.B. Milchprodukten, Fruchtprodukten, Getränken, Suppen, Pasta, Lebensmittelriegeln, Fleischersatz, Snacks, gefrorenen Nachspeisen und Bäckereiprodukten.

Weitere Gesichtspunkte, Vorteile und Verwendungen der vorliegenden Erfindung ergeben sich aus den unten stehenden Absätzen.

Der erfinderische Sojaprozess beinhaltet das Schälen, das Mahlen, die thermische Inaktivierung von Enzymen, um einen unerwünschten Bohnengeschmack zu verringern (indem man die Zuführung von Wärme und Feuchtigkeit zu dem gemahlenen Soja steuert, wodurch bestimmte Enzyme inaktiviert werden, wobei jedoch die ernährungsphysiologische und funktionale Integrität der Makronährmittel und bioaktiven Bestandteile des Sojas bewahrt werden) und das Mikromahlen, um Sojamehlteilchen im Bereich von 0,05 µm bis 150 µm, vorzugsweise im Bereich von 10 bis 50 µm, zu erzeugen.

Unter Verwendung des erfinderischen Sojamehls ist es auch möglich, eine wirtschaftliche und nahrhafte Sojamilch herzustellen durch Hinzugabe von Wasser und Wirkstoffen zum Einstellen des Produktgefühls im Mund und der Viskosität durch spezielle Mischprozesse, bei denen mit hoher Scherung gemischt wird und z.B. eine Kugelmühle verwendet wird.

Beispielsweise können die folgenden beiden Verfahren zum Herstellen von Sojamilch verwendet werden:

Das erfinderische Sojamehl wird in einem wässrigen System unter Verwendung eines Hydrokolloids suspendiert. Es können Süssungsstoffe und/oder andere Geschmacksstoffe hinzugegeben werden. Dadurch erhält man ein Getränk, dessen Dickflüssigkeit ähnlich wie bei einem Milchmixgetränk ist.

Die erfinderischen Sojamehlteilchen werden unter Verwendung einer Kugelmühle mit einem Hydrokolloid verkapselt. Dieser Kugelmühlenprozess verwendet ein relativ hochviskoses Gemisch aus Sojamehl, Wasser und einem Hydrokolloid. Nach dem Mahlen mit der Kugelmühle wird das Gemisch bis auf einen gewissen Proteingehalt verdünnt, der eine gegebene Menge Protein pro Portion bereitstellt. Da das erfinderische Sojamehl geschmacksneutral ist bzw. einen angenehmen Geschmack hat, eignet es sich zum Mischen mit einer Vielzahl von Lebensmittelzusätzen wie Geschmacksstoffen, Gemüsepulver, Fruchtpulver, Phytonährstoffen, Pflanzenextrakten, Hydrokolloiden, Vitaminen, Mineralien, Spurenelementen etc., um ein dispergierbares, instantisiertes Lebensmittelgemisch herzustellen.

Das erfinderische Sojamehl kann verwendet werden, um Sojaprodukte bei verringerten Kosten herzustellen. So ist z.B. die Substitution kostspieliger Soja-Isolate wie z.B. mit Isoflavon angereicherter Sojaprotein-Extrakte etc. möglich.

Das erfinderische Sojamehl hat einen hohen Anteil an bioaktiven Substanzen.

Das erfinderische Sojamehl kann auch verwendet werden, um stabile Emulsionen herzustellen und eine Feuchtigkeits-Regelungsfunktion in Lebensmittelprodukten bereitzustellen.

Das erfinderische Sojamehl kann bei richtiger Kombination mit Hydrokolloiden eine niederglycemische Reaktion erzeugen.

Das erfinderische Sojamehl ist gut verdaulich.

Das erfinderische Sojamehl bewirkt bei Verwendung in anderen Produkten keinen sandigen Geschmack im Mund.

Man vermutet, dass das erfinderische Sojamehl oder Mehle, die es enthalten, sich durch eine hohe Bioverfügbarkeit von bioaktiven Substanzen und Mikronährstoffen auszeichnen.

Das erfinderische Sojamehl erzeugt als feinvermahlene Zugabekombination verbesserte Textureigenschaften.

Die erfinderische Sojabeigabe wird nicht notwendigerweise als Sojamehl dargeboten. Vielmehr kann sie durch Zugabe einer Flüssigkeit, z.B. Öl oder Fett, am Ende der Herstellung des Sojamehls als Paste oder als Flüssigkeit dargeboten werden, die vorzugsweise zuvor sterilisiert wurde.

Auf ähnliche Weise wie bei dem erfindungsgemässen Sojamehl können Mehle auf Basis von Getreidekörnern, Linsen, etc. hergestellt werden, die ähnliche Eigenschaften bezüglich des Geschmacks wie das erfinderische Sojamehl haben.

## Patentansprüche

1. Verfahren zum Herstellen eines Sojamehls aus Sojabohnen, wobei das Verfahren folgende Schritte aufweist.
a) Schälen von Sojabohnen bis zu einem Schälgrad von mehr als 95%;
b) Zerkleinern und Vereinheitlichen der Grösse der geschälten Sojabohnen zu einer Teilchengrössen-Verteilung, bei der 90% der Sojabohnenteilchen im Bereich von 100 µm bis 1 mm liegen, indem man die geschälten Sojabohnen Schlagkräften aussetzt;
c) Deaktivieren eines Enzymsystems der zerkleinerten und in ihrer Grösse vereinheitlichten Sojabohnenteilchen;
d) Feinzerkleinern der zerkleinerten und in ihrer Grösse vereinheitlichten Sojabohnenteilchen bis auf eine Teilchengrössen-Verteilung bei der 95% der Teilchen kleiner als 100*µ*m sind, indem man die deaktivierten, zerkleinerten und in ihrer Grösse vereinheitlichten Sojabohnenteilchen Scherkräften aussetzt.

2. Verfahren nach Anspruch 1, **dadurch gekennzeichnet, dass** der Schälschritt a) an ganzen Sojabohnen durchgeführt wird.

3. Verfahren nach einem der vorhergehenden Ansprüche, **dadurch gekennzeichnet, dass** das Schälen in Schritt a) unter Verwendung einer Schlagschälmaschine durchgeführt wird.

4. Verfahren nach Anspruch 3, **dadurch gekennzeichnet, dass** das Schälen In Schritt a) in einer Schlagschälmaschine durchgeführt wird.

5. Verfahren nach einem der vorhergehenden Ansprüche, **dadurch gekennzeichnet, dass** die Temperatur der Sojabohnen während des Schälens in Schritt a) bei etwa 80 - 85°C gehalten wird, vorzugsweise, indem man sie Lufttemperaturen von etwa 115 - 120°C aussetzt.

6. Verfahren nach einem der vorhergehenden Ansprüche, **dadurch gekennzeichnet, dass** das Zerkleinern und Vereinheitlichen der Grösse in Schritt b) in einer Atmosphäre durchgeführt wird, die weniger als 10 Vol.% Sauerstoff, vorzugsweise in einem Gemisch aus Luft und Stickstoff, enthält.

7. Verfahren nach einem der vorhergehenden Ansprüche, **dadurch gekennzeichnet, dass** die Zerkleinerung und Vereinheitlichung der Grösse in Schritt b) unter Verwendung einer Hammermühle erfolgt.

8. Verfahren nach einem der vorhergehenden Ansprüche, **dadurch gekennzeichnet, dass**, die geschälten Sojabohnen zerkleinert und ihrer Grösse vereinheitlicht werden zu einer Teilchengrössen-Verteilung, bei der 80% der Sojabohnenteilchen im Bereich 100 *µ*m bis 500 *µ*m liegen.

9. Verfahren nach einem der vorhergehenden Ansprüche, **dadurch gekennzeichnet, dass** die zerkleinerten und in ihrer Grösse vereinheitlichten Sojabohnenteilchen bei Temperaturen von 90 bis 100°C in Schritt c) deaktiviert werden.

10. Verfahren nach einem der vorhergehenden Ansprüche, **dadurch gekennzeichnet, dass** die zerkleinerten und in ihrer Grösse vereinheitlichten Sojabohnenteilchen bei relativen Feuchtigkeiten von 95 - 100% in Schritt c) deaktiviert werden.

11. Verfahren nach Anspruch 9 oder 10, **dadurch gekennzeichnet, dass** die Deaktivierung in Schritt c) in einer Zeitdauer von weniger als 5 Minuten durchgeführt wird.

12. Verfahren nach einem der vorhergehenden Ansprüche, **dadurch gekennzeichnet, dass** die Deaktivierung in Schritt c) durch Anfeuchten, Erwärmen und Einwirkenlassen der Feuchtigkeit auf die zerkleinerten und in ihrer Grösse vereinheitlichten Sojabohnenteilchen durchgeführt wird.

13. Verfahren nach einem der vorhergehenden Ansprüche, **dadurch gekennzeichnet, dass** die Deaktivierung in Schritt c) in einem BCTC-Vorkonditionierer von Bühler durchgeführt wird.

14. Verfahren nach einem der vorhergehenden Ansprüche, **dadurch gekennzeichnet, dass** die Deaktivierung in Schritt c) unter Verwendung eines Extruders durchgeführt wird.

15. Verfahren nach einem der vorhergehenden Ansprüche, **dadurch gekennzeichnet, dass** die Feinzerkleinerung in Schritt d) unter Verwendung eines Reibwalzwerks durchgeführt wird.

16. Verfahren nach Anspruch 15, **dadurch gekennzeichnet, dass** die Feinzerkleinerung in Schritt d) in einem Reibwalzwerk durchgeführt wird.

17. Verfahren nach einem der Ansprüche 15 oder 16, **dadurch gekennzeichnet, dass** vor der Feinzerkleinerung in Schritt d) ein Schritt zur Einstellung der Feuchtigkeit erfolgt, bei dem die deaktivierten, zerkleinerten und ihrer Grösse vereinheitlichten geschälten Sojabohnen auf einen Feuchtigkeitswert von 8 bis 12 Gew.%, vorzugsweise von 9 bis 11 Gew.% eingestellt werden.

18. Verfahren nach einem der vorhergehenden Ansprüche, **dadurch gekennzeichnet, dass** der Schritt zum Einstellen der Feuchtigkeit thermo-pneumatisch erfolgt.

19. Verfahren nach einem der vorhergehenden Ansprüche, **dadurch gekennzeichnet, dass** der Feinzerkleinerungsschritt d) Teilchen von 0,05 µm bis 150 µm vorzugsweise im Bereich von 10 bis 50 µm erzeugt.

20. Verfahren nach einem der vorhergehenden Ansprüche, **dadurch gekennzeichnet, dass** das Schälen in Schritt a) bis zu einem Schälgrad von mehr als 98% durchgeführt wird.

21. Sojamehl, hergestellt mit dem Verfahren gemäss Anspruch 1, bei dem die maximale Teilchengrösse kleiner als 150 µm ist, bei dem das Sojabohnen-Enzymsystem zumindest teilweise thermisch deaktiviert und der Schalengehalt kleiner als 0,5 Gew.% ist.

22. Sojamehl nach Anspruch 21, **dadurch gekennzeichnet, dass** die maximale Teilchengrösse im Bereich von 0 05 *µ*m bis 150 *µ*m, vorzugsweise im Bereich von 10 bis 50 *µ*m liegt.

23. Sojamehl nach einem der Ansprüche 21 oder 22, **dadurch gekennzeichnet, dass** der Schalengehalt kleiner als 0,2 Gew.% ist.

24. Sojamehl nach einem der Ansprüche 21 bis 23, **dadurch gekennzeichnet, dass** der Proteingehalt des hergestellten Sojamehls grösser als 100% des Proteingehalts der Ausgangs-Sojabohnen ist.

25. Sojamehl nach Anspruch 24, **dadurch gekennzeichnet, dass** der Nahrungsfasergehalt des hergestellten Sojamehls kleiner als 70% des Nahrungsfasergehalts der Ausgangs-Sojabohnen ist.

26. Sojamehl nach einem der Ansprüche 24 und 25, **dadurch gekennzeichnet, dass** der Lipoxygenase-Gehalt des hergestellten Sojamehls kleiner als 0,1% des Lipoxygenase-Gehalts der Ausgangs-Sojabohnen ist.

27. Sojamehl nach einem der vorhergehenden Ansprüche 24 bis 26, **dadurch gekennzeichnet, dass** der Ölgehalt des hergestellten Sojamehls grösser als 90% des Ölgehalts der Ausgangs-Sojabohnen ist.

28. Sojamehl nach einem der vorhergehenden Ansprüche 24 bis 27, **dadurch gekennzeichnet, dass** der Stickstoff-Löslichkeitsindex (NSI) des hergestellten Sojamehls grösser als 60% des NSI der Ausgangs-Sojabohnen ist.

29. Sojamehl nach einem der vorhergehenden Ansprüche 24 bis 28, **dadurch gekennzeichnet, dass** der Isoflavon-Gehalt des hergestellten Sojamehls grösser als 70% des Isoflavon-Gehalts der Ausgangs-Sojabohnen ist.

30. Sojamehl nach einem der vorhergehenden Ansprüche 24 bis 29, **dadurch gekennzeichnet, dass** die Teilchengrössen-Verteilung des hergestellten Sojamehls derart ist, dass mehr als 30% der Mehlteilchen kleiner 10 µm sind.

31. Sojamehl nach einem der vorhergehenden Ansprüche 24 bis 30, **dadurch gekennzeichnet, dass** der Trypsininhibitor-Gehalt des hergestellten Sojamehls grösser als 50% des Trypsininhibitor-Gehalts der Ausgangs-Sojabohnen ist.

32. Sojamehl nach einem der vorhergehenden Ansprüche 24 bis 31, **dadurch gekennzeichnet, dass** es unter Verwendung eines Verfahrens gemäss einem der Ansprüche 1 bis 20 hergestellt wurde.

33. Verwendung des Sojamehls gemäss einem der vorhergehenden Ansprüche, als eine Zugabe in Lebensmittelprodukten, wie z.B. Milchprodukten, Fruchtprodukten, Getränken, Suppen, Pasta, Lebensmittelriegeln, Fleischersatz, Snacks, gefrorenen Nachspeisen und Bäckereiprodukten.

## Claims

1. A method of producing soya flower from soya beans, wherein the method involves the following stages:
a) Dehulling the soya beans up to a proportion of over 95%;
b) Milling and standardising the sizes of the dehulled soya beans into a particle size distribution in which 90% of the soya bean particles are in the range 100 µm to 1 mm, by subjecting the dehulled soya beans to impact forces;
c) Deactivating an enzyme system in the milled, standard-sized soya bean particles; and
d) Grinding the milled, standard-sized soya bean particles into a particle size distribution in which 95% of the particles are smaller than 100 µm, by subjecting the deactivated, milled, standard-sized soya bean particles to shear forces.

2. The method according to claim 1, **characterised in that** the dehulling stage a) is performed on whole soya beans.

3. The method according to one of the preceding claims, **characterised in that** the dehulling at stage a) is carried out using an impact dehulling machine.

4. The method according to claim 3, **characterised in that** the dehulling at stage a) is carried out in an impact dehulling machine.

5. The method according to one of the preceding claims, **characterised in that** the temperature of the soya beans during the dehulling at stage a) is kept at roughly 80 - 85 °C, preferably while they are exposed to air temperatures of roughly 115 - 120 °C.

6. The method according to one of the preceding claims, **characterised in that** the milling and size-standardisation at stage b) is carried out in an atmosphere containing less than 10 % by vol. oxygen, preferably in a mixture of air and nitrogen.

7. The method according to one of the preceding claims, **characterised in that** the milling and size-standardisation at stage b) can be carried out using a hammer mill.

8. The method according to one of the preceding claims, **characterised in that** the dehulled soya beans are milled and standardised in size, so as to produce a particle size distribution in which 80% of the soya bean particles are within the range 100 µm to 500 mm.

9. The method according to one of the preceding claims, **characterised in that** the milled, standard-sized soya bean particles are deactivated at temperatures of 90 to 100 °C at stage c).

10. The method according to one of the preceding claims, **characterised in that** the milled, standard-sized soya bean particles are deactivated at a relative humidity of 95 - 100% at stage c).

11. The method according to claim 9 or 10, **characterised in that** the deactivation at stage c) is carried out over a period of less than 5 minutes.

12. The method according to one of the preceding claims, **characterised in that** the deactivation at stage c) is carried out by moistening, heating and allowing the moisture to act on the milled, standard-sized soya bean particles.

13. The method according to one of the preceding claims, **characterised in that** the deactivation at stage c) is carried out in a BCTC preconditioner from Bühler.

14. The method according to one of the preceding claims, **characterised in that** the deactivation at stage c) is carried out using an extruder.

15. The method according to one of the preceding claims, **characterised in that** the grinding at stage d) is carried out using a friction rolling mill.

16. The method according to claim 15, **characterised in that** the grinding at stage d) is carried out in a friction rolling mill.

17. The method according to one of the claims 15 or 16, **characterised in that** the grinding stage d) is preceded by a moisture adjustment stage, in which the moisture in the deactivated, milled and standard-sized dehulled soya beans is set at a moisture value of 8 to 12% by wt., preferably 9 to 11% by wt..

18. The method according to one of the preceding claims, **characterised in that** the moisture adjustment stage is thermo-pneumatic.

19. The method according to one of the preceding claims, **characterised in that** the grinding stage d) produces particles measuring 0.05 *µ*m to 150 *µ*m, preferably in the range 10 to 50 *µ*m.

20. The method according to one of the preceding claims, **characterised in that** the dehulling at stage a) preferably achieves a dehulling proportion of over 98%.

21. Soya flour produced using the method according to claim 1, in which the maximum particle size is smaller than 150 *µ*m, in which the soya bean enzyme system is at least partly deactivated by heat and the hull content is less than 0.5 % by wt..

22. The soya flour according to claim 21, **characterised in that** the maximum particle size is within the range 0.05 *µ*m to 150 µm, preferably in the range 10 to 50 µm.

23. The soya flour according to one of the claims 21 or 22, **characterised in that** the hull content is smaller than 0.2% by wt..

24. The soya flour according to one of the claims 21 to 23, **characterised in that** the protein content of the manufactured soya flour is greater than 100% of the protein content of the original soya beans.

25. The soya flour according to claim 24, **characterised in that** the nutritional fibre content of the manufactured soya flour is preferably less than 70% of the nutritional fibre content of the original soya beans.

26. The soya flour according to one of the claims 24 and 25, **characterised in that** the lipoxygenase content of the manufactured soya flour is less than 0.1% of the lipoxygenase content of the original soya beans.

27. The soya flour according to one of the preceding claims 24 to 26, **characterised in that** the oil content of the manufactured soya flour is greater than 90% of the oil content of the original soya beans.

28. The soya flour according to one of the preceding claims 24 to 27, **characterised in that** the nitrogen solubility index (NSI) of the manufactured soya flour is greater than 60% of the NSI of the original soya beans.

29. The soya flour according to one of the preceding claims 24 to 28, **characterised in that** the isoflavone content of the manufactured soya flour is greater than 70% of the isoflavone content of the original soya beans.

30. The soya flour according to one of the preceding claims 24 to 29, **characterised in that** the particle size distribution of the manufactured soya flour is such that over 30% of the flour particles are smaller than 10 *µ*m.

31. The soya flour according to one of the preceding claims 24 to 30, **characterised in that** the trypsin inhibitor content of the manufactured soya flour is greater than 50% of the trypsin inhibitor content of the original soya beans.

32. The soya flour according to one of the preceding claims 24 to 31, **characterised in that** it was produced using a method in accordance with one of the claims 1 to 20.

33. Use of the soya flour in accordance with one of the preceding claims as an ingredient in food products such as, e.g. milk products, fruit products, drinks, soups, pasta, food bars, meat substitutes, snacks, frozen desserts and baking products.

## Revendications

1. Procédé de production d'une farine de soja à partir de fèves de soja, comprenant les étapes suivantes:
a) décorticage des fèves de soja jusqu'à ce qu'un degré de décorticage supérieur à 95 % soit atteint;
b) concassage des fèves de soja décortiquées et l'homogénéisation de leur granulométrie de sorte que la taille de 90 % des particules de fèves de soja soit comprise entre 100 µm et 1 mm, ledit résultat étant obtenu en soumettant les fèves de soja décortiquées à un broyage à marteaux;
c) désactivation d'un système enzymatique des particules de fèves de soja concassées présentant une taille homogénéisée ;
d) mouture fine des particules de fèves de soja concassées et homogénéisées quant à leur taille pour obtenir une telle granulométrie que la taille de 95 % des particules est inférieure à 100 µm, ledit résultat étant obtenu en soumettant les particules de fèves de soja désactivées, concassées et homogénéisées quant à leur taille à des forces de cisaillement.

2. Procédé selon la revendication 1, **caractérisé en ce que** l'étape de décorticage a) est réalisée sur des fèves de soja entières.

3. Procédé selon une des revendications précitées,
**caractérisé en ce que** le décorticage à l'étape a) est réalisé à l'aide d'une broyeuse-décortiqueuse.

4. Procédé selon la revendication 3, **caractérisé en ce que** le décorticage à l'étape a) est réalisé dans une broyeuse-décortiqueuse.

5. Procédé selon une des revendications précitées, **caractérisé en ce que**, durant le décorticage à l'étape a), la température des fèves de soja est maintenue aux alentours de 80 à 85°C, de préférence en les exposant à des températures de l'air d'environ 115 à 120°C.

6. Procédé selon une des revendications précitées, **caractérisé en ce que**, le concassage ainsi que l'homogénéisation de la granulométrie, effectués à l'étape b), sont réalisés sous une atmosphère contenant moins de 10 % en volume d'oxygène, de préférence dans un mélange constitué d'air et d'azote.

7. Procédé selon une des revendications précitées, **caractérisé en ce que** le concassage ainsi que l'homogénéisation de la granulométrie à l'étape b) sont réalisés à l'aide d'un broyeur à marteaux.

8. Procédé selon une des revendications précitées, **caractérisé en ce que** le concassage des fèves de soja décortiquées ainsi que l'homogénéisation de leur granulométrie sont effectués de sorte que la taille de 80 % des particules de fèves de soja soit comprise entre 100 µm et 500 µm.

9. Procédé selon une des revendications précitées, **caractérisé en ce que** la désactivation des particules de fèves de soja concassées et homogénéisées quant à granulométrie est effectuée, à l'étape c), à des températures entre 90 et 100 °C.

10. Procédé selon une des revendications précitées, **caractérisé en ce que** la désactivation des particules de fèves de soja concassées et homogénéisées quant à granulométrie est effectuée, à l'étape c), à une humidité relative entre 95 et 100 %.

11. Procédé selon les revendications 9 ou 10, **caractérisé en ce que** la désactivation, à l'étape c), est réalisée pendant une durée de moins de 5 minutes.

12. Procédé selon une des revendications précitées, **caractérisé en ce que** la désactivation, à l'étape c), est effectuée en humidifiant les particules de fèves de soja concassées et homogénéisées quant à leur taille, en les chauffant et en laissant l'humidité agir.

13. Procédé selon une des revendications précitées, **caractérisé en ce que** la désactivation, à l'étape c), est réalisée dans un appareil de préconditionnement, modèle BCTC, de Bühler.

14. Procédé selon une des revendications précitées, **caractérisé en ce que** la désactivation, à l'étape c), est réalisée à l'aide d'une extrudeuse.

15. Procédé selon une des revendications précitées, **caractérisé en ce que** la mouture fine, à l'étape d), est réalisée à l'aide d'un moulin à cylindres.

16. Procédé selon la revendication 15, **caractérisé en ce que** la mouture fine, à l'étape d), est réalisée dans un moulin à cylindres.

17. Procédé selon une des revendications 15 ou 16, **caractérisé en ce que** la mouture fine, à l'étape d), est précédée d'une étape d'ajustement d'humidité lors de laquelle l'humidité des fèves de soja décortiquées, concassées et désactivées est ajustée à un taux d'humidité compris entre 8 et 12 % en poids, de préférence entre 9 et 11 % en poids.

18. Procédé selon une des revendications précitées, **caractérisé en ce que** l'étape d'ajustement de l'humidité est effectuée de manière thermo-pneumatique.

19. Procédé selon une des revendications précitées, **caractérisé en ce que** l'étape de mouture fine d) conduit à des particules mesurant de 0,05 µm à 150 *µ*m, de préférence entre 10 et 50 *µ*m.

20. Procédé selon une des revendications précitées, **caractérisé en ce que** le décorticage, à l'étape a) est réalisé de manière à atteindre un degré de décorticage supérieur à 98 %.

21. Farine de soja, produite par le procédé selon la revendication 1, dont la taille maximale des particules est inférieure à 150 *µ*m et dont le système enzymatique des fèves de soja a été, au moins partiellement, thermiquement désactivé et dont la teneur en coques est inférieure à 0,5 % en poids.

22. Farine de soja selon la revendication 21, **caractérisée en ce que** la taille maximale des particules se situe entre 0,05 et 150 *µ*m, de préférence entre 10 et 50 *µ*m.

23. Farine de soja selon une des revendications 21 ou 22, **caractérisée en ce que** la teneur en coques est inférieure à 0,2 % en poids.

24. Farine de soja selon une des revendications 21 à 23, **caractérisée en ce que** la teneur en protéines de la farine de soja obtenue est supérieure à 100 %, par rapport à la teneur en protéines des fèves de soja de départ.

25. Farine de soja selon la revendication 24, **caractérisée en ce que** la teneur en fibres alimentaires de la farine de soja obtenue est inférieure à 70 %, par rapport à la teneur en fibres alimentaires des fèves de soja de départ.

26. Farine de soja selon une des revendications 24 et 25, **caractérisée en ce que** la teneur en lipoxygénase de la farine de soja obtenue est inférieure à 0,1 %, par rapport à la teneur en lipoxygénase des fèves de soja de départ.

27. Farine de soja selon une des revendications 24 à 26 précitées, **caractérisée en ce que** la teneur en huile de la farine de soja obtenue est supérieure à 90 %, par rapport à la teneur en huile des fèves de soja de départ.

28. Farine de soja selon une des revendications 24 à 27 précitées, **caractérisée en ce que** l'indice de solubilité de l'azote (NSI) de la farine de soja obtenue est supérieur à 60 %, par rapport au NSI des fèves de soja de départ.

29. Farine de soja selon une des revendications 24 à 28 précitées, **caractérisée en ce que** la teneur en isoflavones de la farine de soja obtenue est supérieure à 70 %, par rapport à la teneur en isoflavones des fèves de soja de départ.

30. Farine de soja selon une des revendications 24 à 29 précitées, **caractérisée en ce que** la granulométrie de la farine de soja obtenue est telle que plus de 30 % des particules de farine mesurent moins de 10 µm.

31. Farine de soja selon une des revendications 24 à 30 précitées, **caractérisée en ce que** la teneur en inhibiteur de trypsine de la farine de soja obtenue est supérieure à 50 %, par rapport à la teneur en inhibiteur de trypsine des fèves de soja de départ.

32. Farine de soja selon une des revendications 24 à 31 précitées, **caractérisée en ce qu'**elle a été produite à l'aide d'un procédé selon une des revendications 1 à 20.

33. Utilisation de la farine de soja selon une des revendications précitées en tant qu'additif dans des produits alimentaires comme, par exemple, les produits laitiers, les produits à base de fruits, les boissons, les soupes, les pâtes, les barres alimentaires, les succédanés de viande, les produits de grignotage, les desserts congelés et les produits de boulangerie.
